# EUROPÄISCHE PATENTSCHRIFT

(11) **EP 3 420 418 B1**
(45) Veröffentlichungstag und Bekanntmachung des Hinweises auf die Patenterteilung: **16.12.2020**
(21) Anmeldenummer: 16829093.0
(22) Anmeldetag: 29.12.2016
(51) Int. Cl.: G05B 15/02, B29C 49/42, B29C 49/78

(54) **VERFAHREN ZUM BETREIBEN EINER BEHANDLUNGSANLAGE ZUM BEHANDELN VON BEHÄLTNISSEN MIT REZEPTERSTELLUNG FÜR DIE STEUERUNG**
METHOD FOR OPERATING A HANDLING SYSTEM FOR HANDLING CONTAINERS WITH RECIPE CREATION FOR THE CONTROL
PROCÉDÉ DE FONCTIONNEMENT D'UNE INSTALLATION DE TRAITEMENT DE RÉCIPIENT AVEC ÉLABORATION D'UNE RECETTE POUR LA COMMANDE

(30) Priorität: 23.02.2016 DE 102016103117
(43) Veröffentlichungstag der Anmeldung: 02.01.2019
(73) Patentinhaber: Krones AG, 93073 Neutraubling (DE)
(72) Erfinder: ZOELFL, Markus, 93073 Neutraubling (DE); AUST, Robert, 93073 Neutraubling (DE)
(74) Vertreter: Bittner, Bernhard
(86) Internationale Anmeldenummer: PCT/EP2016/082807
(87) Internationale Veröffentlichungsnummer: WO 2017/144145

(56) Entgegenhaltungen:
- EP-A1- 2 415 677
- WO-A1-2005/022279
- US-A1- 2005 194 705

## Beschreibung

Die vorliegende Erfindung bezieht sich auf ein Verfahren zum Behandeln von Behältnissen und insbesondere auf ein Verfahren zum Betreiben von entsprechenden Anlagen zum Behandeln von Behältnissen. Derartige Anlagen zum Behandeln von Behältnissen sind aus dem Stand der Technik in vielfältiger Weise bekannt. So sind beispielsweise Umformungseinrichtungen bekannt, welche Kunststoffvorformlinge zu Kunststoffbehältnissen umformen. Daneben sind Öfen bekannt, welche derartige Kunststoffvorformlinge in Vorbereitung eines Umformungsprozesses, wie insbesondere eines Blasformprozesses erwärmen.

Daneben sind jedoch auch andere Anlagen bekannt, die zum Behandeln derartiger Behältnisse und insbesondere derartiger Kunststoffbehältnisse dienen, wie beispielsweise Füllmaschinen, Etikettiermaschinen, Druckmaschinen und dergleichen. Beim Betrieb derartiger Maschinen kann es jedoch vorkommen, dass dieser durch unterschiedliche Umgebungsbedingungen, beispielsweise unterschiedliche Umgebungstemperaturen, Drücke oder Feuchtigkeitsgrade stark beeinflusst wird. In Abhängigkeit von einem Aufstellungsort der Anlage können sich deren Betriebsbedingungen deutlich unterscheiden. So unterscheiden sich etwa die Umgebungsdrücke an einem Aufstellungsort auf Meereshöhe deutlich von einem Aufstellungsort in großer Höhe, etwa in einer Höhe von mehr als 4000m. Beispielsweise kann der Luftbedarf einer auf Meereshöhe betriebenen Streckblasmaschine wesentlich geringer sein als der Luftbedarf einer in großer Höhe betriebenen Anlage. Auch kann sich der deutlich geringere Siedepunkt einer in großer Höhe betriebenen Anlage erheblich auf den Betrieb dieser Anlage auswirken.

Auch lässt sich in der Praxis an dem Arbeitsergebnis, d. h. beispielsweise der fertiggestellten befüllten und etikettierten Flasche nicht nachvollziehen, welche Maschinen beispielsweise ein Abweichen von einem Soll-Wert verursacht hat.

Die Behältnisse werden in allen bzw. in mehreren Behandlungsstationen mit Druck beaufschlagt, sodass beispielsweise eine Durchmesserabweichung in allen drei Maschinen oder auch nur in einer verursacht werden kann. Dies erschwert eine Regelung, wobei bislang auch keine Vorgehensweisen definiert sind.

Aus dem Stand der Technik bezüglich einer Parametrisierung von Anlagen sind hierzu die Dokumente: EP 2 415 677 A1 sowie WO 2005/022279 A1 bekannt.

Der vorliegenden Erfindung liegt daher die Aufgabe zugrunde, eine Möglichkeit zu schaffen, vor dem (und/oder bei dem) Betrieb bzw. bei der vor der Inbetriebnahme derartiger Maschinen auch Umgebungseinflüsse einkalkulieren zu können und auf Basis dieser vor Ort Gegebenheiten ein Betriebsrezept erstellen zu können. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Betreiben einer Anlage zum Behandeln von Behältnissen, weist diese Anlage zum Behandeln von Behältnissen eine erste Behandlungseinrichtung auf, welche die Behältnisse in einer ersten vorgegebenen Weise behandelt, sowie eine zweite Behandlungseinrichtung, welche die Behältnisse in einem zweiten vorgegebenen Weise behandelt, sowie eine Transporteinrichtung, welche die Behältnisse von der ersten Behandlungseinrichtung zu der zweiten Behandlungseinrichtung transportiert. Erfindungsgemäß steuert eine Steuerungseinrichtung die Behandlung der Behältnisse durch wenigstens eine der beiden Behandlungseinrichtungen unter Verwendung und/oder auf Grundlage eines ersten physikalischen Parameters, der für Umgebungsbedingungen an einem Betriebsort der Anlage charakteristisch ist, und/oder unter Verwendung und/oder auf Grundlage wenigstens eines zweiten physikalischen Parameters, der für eine physikalische Eigenschaft der zu behandelnden Behältnisse charakteristisch ist, wobei wenigstens einer dieser beiden physikalischen Parameter bestimmt wird und unter Zugrundelegung dieses Parameters sowie unabhängig von der Anlage ein Betriebsrezept ermittelt wird, mittels dessen die Steuerungseinrichtung wenigstens eine Behandlungseinrichtung steuert.

Unter einer Behandlung der Behältnisse werden jegliche Prozesse behandeln, welche sich auf die Behältninsse und/oder deren Eigenschaften auswirken, insbesondere sind die Behandlungen aus einer Gruppe von Behandlungen ausgewählt, welche ein Erwärmen der Kunststoffvorformlinge, eine Sterilisation der Kunststoffvorformlinge, ein Umformen der Kunststoffvorformlinge zu den Kunststoffbehältnissen bzw. Kunststoffflaschen, ein Befüllen der Kunststoffbehältnisse, eine Sterilisation der Kunststoffbehältnisse und eine Ausstattung der Kunststoffbehältnisse, beispielsweise ein Etikettieren, Bedrucken oder Verschließen der Behältnissen enthält.

Unter einem Ermitteln des Betriebsrezept unabhängig von der Anlage wird insbesondere verstanden, dass dieses Ermitteln zeitlich und/oder örtlich unabhängig von dieser Anlage ermittelt wird, insbesondere an einem anderen Ort. Insbesondere ist es für die Ermittlung des Betriebsrezepts unerheblich, ob sich die Anlage gerade in Betrieb befindet oder nicht. Mit anderen Worten hängt insbesondere die Ermittlung des Betriebsrezepts nicht von einem momentanen Zustand der Anlage ab.

Es wird daher vorgeschlagen, dass entsprechende Betriebsrezepte zum Betreiben der Anlage ermittelt werden und hierbei insbesondere vor Ort Bedingungen der Anlage berücksichtigt werden und/oder Bedingungen, welche für den Betrieb der Anlage an ihrem Betriebsort charakteristisch sind, wie insbesondere aber nicht ausschließlich klimatische Bedingungen an dem Betriebsort oder etwa materialspezifische Bedingungen (z.B. der Kunststoffvorformlinge).

Es wird daher bevorzugt eine Möglichkeit vorgeschlagen, um bereits vor dem Betrieb bzw. vor der Inbetriebnahme die genannten Einflüsse zu berücksichtigen. Unter dem Begriff "Vor der Inbetriebnahme" wird in diesem Zusammenhang verstanden, dass ein mit diesem Verfahren gewonnenes Betriebsrezept bereits beim Herstellen bzw. dem Aufbau der Behälterbehandlungsmaschine berücksichtigt wird, also beispielsweise schon in die Maschinensteuerung übertragen wird. Der Vorteil ist, dass wenigstens eine grobe Parametrierung vorgegeben werden kann. Ein weiterer Vorteil ist, dass die Anlage beim Kunden zumindest mit verminderter Leistung/ Qualität "anfahren" kann und dann eine Feinkorrektur, etwa durch Spezialisten des Herstellers vorgenommen wird. Diese Spezialisten müssen also nicht mehr warten, bis alle mechanischen und elektrischen Unzulänglichkeiten behoben sind, sondern können just in time anreisen.

Damit wird ein Rezept aufgrund von bekannten vor Ort Bedingungen hergestellt. Bei einem bevorzugten Verfahren erfolgt daher das Ermitteln dieser Parameter an dem Ort der Inbetriebnahme dieser Anlage. Vorteilhaft handelt es sich um einen physikalischen Parameter, der den Betrieb der Anlage beeinflusst und der insbesondere das Behandlungsergebnis beeinflusst.

Bei einem bevorzugten Verfahren weist die Anlage eine Umformungseinrichtung auf, welche Kunststoffvorformlinge zu Kunststoffbehältnissen umformt und insbesondere expandiert. Insbesondere handelt es sich bei dieser Umformungseinrichtung um eine Blasmaschine die insbesondere eine Streckblasmaschine. Bei einem weiteren bevorzugten Verfahren weist die Anlage eine Erwärmungseinrichtung auf, welche Kunststoffvorformlinge erwärmt. Bevorzugt ist daher diese Erwärmungseinrichtung der Umformungseinrichtung vorgeschaltet, sodass zunächst Kunststoffvorformlinge erwärmt werden und diese erwärmten Kunststoffvorformlinge anschließend mit einem gasförmigen Medium und insbesondere mit Druckluft expandiert werden. Bei den Behältnissen handelt es sich bevorzugt um Kunststoffbehältnisse. Es wird jedoch darauf hingewiesen, dass die vorliegende Erfindung auch auf die Herstellung und/oder Verarbeitung anderer Behältnisse, wie etwa Glasbehältnisse Anwendung finden kann.

Bei einem weiteren bevorzugten Verfahren weist die Vorrichtung eine Fülleinrichtung auf, welche die erzeugten Behältnisse, bei denen es sich insbesondere um Kunststoffbehältnisse handelt, mit einer Flüssigkeit und insbesondere einem Getränk befüllt. Bei einem weiteren bevorzugten Verfahren werden die expandierten Behältnisse mit Etiketten und/oder Drucken versehen. Dabei ist es sowohl möglich, dass die bereits befüllten Behältnisse mit den Etiketten versehen werden, als auch die umgeformten und noch nicht befüllten Behältnisse (d. h. vor der Befüllung) mit entsprechenden Etiketten (allg. als Ausstattung bezeichnet) versehen werden.

Bei einem weiteren bevorzugten Verfahren enthält das Betriebsrezept wenigstens einen Betriebsparameter, bevorzugt eine Vielzahl von Betriebsparametern. Unter Betriebsparametern werden Parameter verstanden, die bei der Herstellung der Behältnisse relevant sind bzw. die vorgegeben werden. Vorteilhaft sind diese Betriebsparameter aus einer Gruppe von Betriebsparametern gewählt ausgewählt, welche eine Betriebsgeschwindigkeit, eine Ofentemperatur zum Erwärmen der Kunststoffvorformlinge, Drücke zum Expandieren der Kunststoffvorformlinge, Rotationsgeschwindigkeiten von Kunststoffvorformlingen innerhalb der Erwärmungseinrichtung, Temperaturen und dergleichen, enthält.

Daneben können diese Betriebsparameter auch für Verbrauchsmaterialien spezifisch sein. So kann ein Betriebsrezept etwa Hinweise darüber enthalten, welche Klebstoffe zum Ankleben von Etiketten bei bestimmten klimatischen Umgebungen einzusetzen sind. Auch können im Rahmen der Betriebsrezepte Empfehlungen über zu verwendende Sterilisationsmittel ausgegeben werden. Daneben können jedoch auch im Rahmen der Betriebsrezepte Materialeigenschaften vorgeschlagen werden, etwa bestimmte Dichtungselemente und dergleichen. Bevorzugt enthalt daher das Betriebsrezept auch wenigstens eine Information welche für die Verwendung einer bestimmten Betriebssubstanz (z. B: Etikettenleim, Sterilisationsmedium oder (flüssiges oder gasförmiges) Dichtmittel) und/oder eines für den Betrieb zu verwendenden Materials charakteristisch ist.

Bei einem weiteren bevorzugten Verfahren weist die Anlage auch eine Sterilisationseinrichtung auf, welche die Kunststoffvorformlinge oder die hieraus gefertigten Kunststoffbehältnisse sterilisiert. Diese Sterilisationseinrichtung kann dabei die Kunststoffvorformlinge oder die daraus gefertigten Kunststoffflaschen mit einem fließfähigen Sterilisationsmedium, beispielsweise Wasserstoffperoxid beaufschlagen. Es wäre jedoch auch möglich, dass die Sterilisation durch Beaufschlagung mit elektromagnetischer Strahlung insbesondere Elektronenstrahlung, Röntgenstrahlung oder UV-Strahlung erfolgt.

Erfindungsgemäss wird das Betriebsrezept wenigstens an einem von dem Betriebsort unterschiedlichen Ort ermittelt. So ist es beispielsweise möglich, dass an dem Betriebsort die besagten physikalischen Parameter ermittelt werden und auf Grundlage dieser Parameter an einem anderen Ort, etwa dem Herstellungsort der Anlage die entsprechenden Betriebsrezepte ermittelt werden. So ist es möglich, dass sich am Betriebsort, beispielsweise in der Halle eines Kunden, eine Vielzahl von Sensoren befindet, welche Umgebungsbedingungen messen. Diese Daten können anschließend zu dem Hersteller der Maschine übertragen werden und bevorzugt dort analysiert werden.

Bei einem weiteren bevorzugten Verfahren werden auf Basis des wenigstens einen physikalischen Parameters an dem von dem Betriebsort unterschiedlichen Ort Betriebsbedingungen simuliert und/oder geschaffen, welche den Umgebungsbedingungen an dem Betriebsort angepasst sind. So ist es beispielsweise möglich, dass am Herstellungsort eine Klimakammer verwendet wird, an der die Umgebungsbedinungen des Betriebsorts nachgestellt bzw. Tagesprofile oder ganze Langzeitprofile nachgefahren werden. So kann beispielsweise eine Tagestemperatur an dem Betriebsort gemessen werden und in einer Testumgebung diese Betriebstemperatur nachgestellt werden.

Es wäre jedoch auch möglich, dass im Rahmen eines Modells, beispielsweise eines Computermodells die besagten Betriebsbedingungen simuliert werden und auf diese Weise ermittelt und/oder simuliert wird, wie die Anlage auf die gegebenen Betriebsbedingungen reagiert. Bevorzugt werden dabei diese Umgebungen in der Simulations- oder Testumgebung möglichst weitgehend an die Bedingungen am Betriebsort angepasst. Alternativ können die Umgebungsbedingungen unter Nutzung von künstlicher Intelligenz bewertet werden. Diese Rechenmodelle sind besonders geeignet für variable Größen, die erst bei Inbetriebnahme bzw. endgültigem Flaschendesign eingestellt bzw. festgelegt werden wie beispielsweise Endblasdruck für die endgültige Flaschenform bzw. Konturausformung. Damit können z.B. mehrere Rezepte für unterschiedliche Drücke erstellt werden. Als einfachste Form der Rezepterstellung können Datenbankinformationen vorhandener Anlagen mit zur Rezepterstellung herangezogen werden. Daneben wäre es in diesem Zusammenhang auch möglich, etwa meteorlogische Daten eines bestimmten Aufstellungsorts zu berücksichtigen.

Auf Basis dieser Werte wird die Reaktion der Maschine ermittelt und so können Betriebsrezepte ausgegeben werden. Diese können wiederum an den Kunden übergeben werden und vor Ort eingestellt werden. Dabei kann jedoch dieses Einstellen vor Ort auch automatisch erfolgen. Bei einem weiteren bevorzugten Verfahren ist die Steuerungseinrichtung dazu geeignet und bestimmt, auf Basis der vorgegebenen Betriebsrezepte den Arbeitsbetrieb der Maschine zu steuern und/oder zu regeln.

Bei einem weiteren bevorzugten Verfahren wird das Betriebsrezept mittels einer weiteren Anlage zum Behandeln von Behältnissen ermittelt. Bei dieser Vorgehensweise ist eine weitere Anlage an dem Herstellungsort vorgesehen, welche mit den oben genannten ermittelten Betriebs- bzw. Umgebungsbedingungen in Betrieb genommen wird. So kann beispielsweise innerhalb einer Klimakammer diese entsprechende weitere Maschine betrieben werden und so kann ermittelt werden, welches das richtige Betriebsrezept ist. Bevorzugt handelt es sich bei der weiteren Anlage um eine der in Betrieb zu nehmenden Anlage baugleiche Anlage. Auf diese Weise können die nötigen Betriebsrezepte mit hoher Genauigkeit ermittelt werden.

Bei einem weiteren bevorzugten Verfahren ist der erste physikalische Parameter aus einer Gruppe von physikalischen Parametern ausgewählt, welche eine Umgebungstemperatur in der Maschinenhalle, in welcher die Anlage sich befindet, eine Außentemperatur, eine Innentemperatur, eine Temperatur von bestimmten Bauteilen, einen Luftdruck, eine Luftfeuchtigkeit, einen Feuchtigkeitsgrad von Kunststoffvorformlingen, eine Temperatur von Kunststoffvorformlingen und dergleichen enthält. Diese Umgebungsbedinungen werden bevorzugt in der Versuchsumgebung nachgestellt um die Reaktionen der Maschine hierauf zu testen.

Bei einem weiteren bevorzugten Verfahren wird der erste Parameter, beispielsweise an einen Hersteller, übermittelt. Bevorzugt erfolgt diese Übermittlung drahtlos, beispielsweise über das Internet.

Bei einem weiteren bevorzugten Verfahren wird der erste physikalische Parameter mittels einer Sensoreinrichtung bestimmt. So ist es, wie oben erwähnt, möglich, dass am Betriebsort diese Parameter ermittelt werden.

Vorteilhaft werden hinsichtlich wenigstens eines physikalischen Parameters Langzeitmessungen vorgenommen. So werden beispielsweise Temperaturen oder Luftfeuchtigkeiten über längere Zeiten hin gemessen und bevorzugt abgespeichert. Auf diese Weise können auch Schwankungen dieser Werte festgelegt werden.

Wie erwähnt ist es dabei möglich, dass am Betriebsort entsprechende Messeinrichtungen zur Verfügung stehen. Falls diese Messeinrichtungen nicht zur Verfügung stehen, wäre es möglich, einen geeigneten Prüfstand zur Verfügung zu stellen, der derartige Messeinrichtungen aufweist. So kann beispielsweise ein Koffer mit den benötigten Messmitteln ausgestattet werden. Der Vorteil dieser Vorgehensweise besteht darin, dass sehr einheitliche Messungen aufgenommen werden und auch Messfehler leichter ausgeschlossen werden können. So kann dieser Koffer beispielsweise die jeweils benötigten Messmittel beinhalten, die zur Rezepterstellung beispielsweise von blasformbaren Behältern benötigt werden.

Dieser Koffer kann beispielsweise ein Zentralgerät mit einem Langzeitdatenlogger zur Erfassung von Messwerten haben. Bei diesen Messwerten kann es sich, wie oben erwähnt, beispielsweise um Temperaturmesswerte, Messerwerte für die Luftfeuchte, Messwerte eines Kristallinitätsgrades (beispielsweise im Rahmen von Infrarotspektroskopie), einer Farbe des zu verarbeitenden Kunststoffvorformlings, einen Absorptionsgrad im relevanten Spektrum (beispielsweise mittels Infrarotspektroskopie) oder auch die Ermittlung von zusätzlichen Markierungen, wie beispielsweise Zusatzcodes handeln, wobei diese Codes Auskunft über einen Preform-Hersteller, ein Herstelldatum und evtl. eingearbeitete Additive geben können.

Bei dieser Markierung kann es sich beispielsweise um alphanumerische Codes, um eindimensionale Codes, um zweidimensionale Codes, QR-Codes, DataMatrizen und dergleichen handeln. Vorteilhaft besteht eine drahtlos-Verbindung dieses Messgeräts zu einem Zentralgerät. Daneben ist bevorzugt auch eine Verbindungsmöglichkeit eines derartigen Messkoffers zum Kundennetz gegeben. Schließlich ist bevorzugt auch eine Verbindungsmöglichkeit zu einer Zielmaschine gegeben.

Weiterhin kann bevorzugt eine Arbeitsanweisung bzw. eine Bedienungsanleitung auf dem Zentralgerät vorhanden sein. Vorteilhaft kann dieses "Klein-Labor" einem Kunden temporär zur Verfügung gestellt werden und kann nach Abschluss der Rezepterstellung wieder an den Hersteller zurückgesandt werden. Dabei ist es bevorzugt, wenn ein derartiges Gerät bzw. ein derartiger Koffer postalisch zugelassen ist, um eine Umverpackung überflüssig zu machen. Daneben kann ein derartiger Messkoffer auch ein GSM-Verbindungsmodul zur Datenübertragung an den Hersteller aufweisen.

Bei einem weiteren bevorzugten Verfahren ist der zweite physikalische Parameter aus einer Gruppe physikalischer Parametern ausgewählt, welche ein Alter der Kunststoffvorformlinge, ein Material der Kunststoffvorformlinge, optische Eigenschaften der Kunststoffvorformlinge - insbesondere eine IR-Absorption der Kunststoffvorformlinge und dergleichen enthält. Insbesondere handelt es sich auch bei diesen zweiten physikalischen Parametern um Eigenschaften, welche sich auf eine Erwärmung und/oder einen Streckblasvorgang der Kunststoffvorformlinge auswirken könne.

Bei einem weiteren bevorzugten Verfahren wird eine Vielzahl von ersten Parametern oder eine Vielzahl von zweiten Parametern bestimmt. Auf Basis dieser Vielzahl insbesondere unterschiedlicher Parameter (beispielsweise Temperatur, Luftfeuchtigkeit und dergleichen) kann ein sehr genaues Bild der Umgebungsbedingungen am Verarbeitungsort bzw. Betriebsort erstellt werden. Ausgehend von diesem Bild kann wiederum ein sehr genaue Simulation von Maschinenbedingungen oder eine sehr genaue Ermittlung von Betriebsrezepten erfolgen.

Bei einem weiteren bevorzugten Verfahren wird das Betriebsrezept nach einer erstmaligen Inbetriebnahme der Anlage ermittelt. So ist es denkbar, dass sich auch die Anlage selbst bzw. deren eigener Betrieb auf die Umgebungsbedinungen auswirken kann. So kann sich beispielsweise die Eigentemperatur des Ofens auch auf die Umgebungstemperatur in der Maschinenhalle auswirken. Bei einem bevorzugten Verfahren wird daher die entsprechende Maschine zunächst in einen Test- oder auch Arbeitsbetrieb genommen, und in Laufe dieses Arbeitsbetriebs werden die Umgebungsbedingungen bestimmt. Ausgehend von diesen Umgebungsbedingungen können dann die entsprechenden Betriebsrezepte erstellt werden. Auch wäre es möglich, dass zumindest einige der physikalischen Parameter außerhalb eines Anlagenbetriebs aufgenommen werden, etwa solche Parameter, welche von dem Betrieb der Anlage nicht beeinflusst werden, wie etwa eine Außentemperatur.

Bei einem weiteren bevorzugten Verfahren wird wenigstens eine physikalische Eigenschaft ermittelt, welche von einem von der Anlage hergestelltes Behältnis charakteristisch ist, und diese physikalische Eigenschaft wird bei der Ermittlung des Betriebsrezepts berücksichtigt. So ist es beispielsweise möglich, dass die fertiggestellten Behältnisse überprüft werden, beispielsweise eine Wandungsstärke von Kunststoffflaschen ermittelt wird und auch dies berücksichtigt wird. Falls beispielsweise ein Ist-Wert einer Wandungsstärke von einem Soll-Wert abweicht, kann auch dies bei der Ermittlung des Betriebsrezepts berücksichtigt werden. Dabei wäre es möglich, dass derartige Messungen der Behältnisse des Öfteren durchgeführt werden, beispielsweise nach einer Umformungsmaschine, nach einer Befüllungsmaschine und nach einer Etikettiermaschine. Allgemein können damit auch solche (Mess)Werte, welche sich direkt auf den konkreten Herstellungsprozess der Behältnisse beziehen, bestimmt und übertragen werden.

Die vorliegende Erfindung ist weiterhin auf eine Anlage zum Behandeln von Behältnissen gerichtet, wobei diese Anlage zum Behandeln von Behältnissen eine erste Behandlungseinrichtung aufweist, welche die Behältnisse in einer ersten vorgegebenen Weise behandelt und wenigstens eine zweite Behandlungseinrichtung, welche die Behältnisse in einer zweiten vorgegebenen Weise behandelt sowie eine Transporteinrichtung, welche die Behältnisse von der ersten Behandlungseinrichtung zu der zweiten Behandlungseinrichtung transportiert. Daneben ist eine Steuerungseinrichtung vorgesehen, welche die Behandlung der Behältnisse durch wenigstens eine der beiden Behandlungseinrichtungen und insbesondere durch beide Behandlungseinrichtungen steuert.

Erfindungsgemäß weist die Anlage wenigstens eine erste Erfassungseinrichtung zum Erfassen wenigstens eines ersten physikalischen Parameters auf, der für Umgebungsbedingungen an einem Betriebsort der Anlage charakteristisch ist und/oder eine zweite Erfassungseinrichtung zum Erfassen wenigstens eines zweiten physikalischen Parameters, der für eine physikalische Eigenschaft der zu behandelnden Behältnisse charakteristisch ist sowie eine Betriebsrezeptermittlungseinrichtung, welche dazu geeignet und bestimmt ist, unter Zugrundelegung wenigstens eines dieser Parameter ein Betriebsrezept zu ermitteln, mittels dessen die Steuerungseinrichtung wenigstens eine Behandlungseinrichtung steuert.

Bei einer bevorzugten Ausführungsform ist auch eine Übertragungseinrichtung vorgesehen, welche die erfassten physikalischen Parameter insbesondere drahtlos überträgt. Besonders bevorzugt ist die Betriebsrezeptermittlungseinrichtung an einem anderen Ort befindlich als die Behandlungseinrichtungen. Dies bietet den Vorteil, dass zentral beispielsweise von einem Herstellungsort des Anlagenherstellers aus die Betriebsrezepte ermittelt werden und hierzu nicht (kosten- und zeitintensiv) am Aufstellungsort der Anlage die Betriebsrezepte ermittelt werden müssen.

Bei einer weiteren vorteilhaften Ausführungsform weist die Vorrichtung eine Simulationsumgebung auf, innerhalb derer von der wenigstens einen Erfassungseinrichtung ermittelte Umgebungsbedingungen simulierbar sind. Dabei ist es möglich, dass diese Umgebungsbedingungen tatsächlich simuliert werden, beispielsweise in einer Testumgebung bestimmte Temperaturen und Luftfeuchten geschaffen werden. Es wäre jedoch auch möglich, dass es sich bei der Simulationsumgebung um ein Computermodell handelt, welches unterschiedlichste Betriebsdaten berücksichtigt und welches auch unterschiedliche Anlagen bzw. Anlagenteile berücksichtigen kann.

Weiterhin wäre es auch möglich, die besagten Schritte, d. h. die Ermittlung eines Betriebsrezepts iterativ durchzuführen. So könnten beispielsweise die Umgebungsbedinungen gemessen werden und auf Basis dieser Umgebungsbedingungen könnte ein erstes Betriebsrezept ermittelt werden. Anschließend wird die Anlage auf Basis dieses ersten Betriebsrezepts in Betrieb genommen und überprüft, ob ein Arbeitsergebnis einem vorgegebenen Soll-Ergebnis entspricht. Falls dies nicht so ist, können noch einzelne Betriebsparameter nachgeregelt werden.

Weitere Vorteile und Ausführungsformen ergeben sich aus den beigefügten Zeichnungen. Hierbei zeigen:
- Fig. 1: eine grob schematische Darstellung einer Anlage zum Behandeln von Behältnissen;
- Fig. 2: eine schematische Darstellung eines erfindungsgemäßen Verfahrens; und
- Fig. 3: ein Ablaufdiagramm für ein erfindungsgemäßes Verfahren.

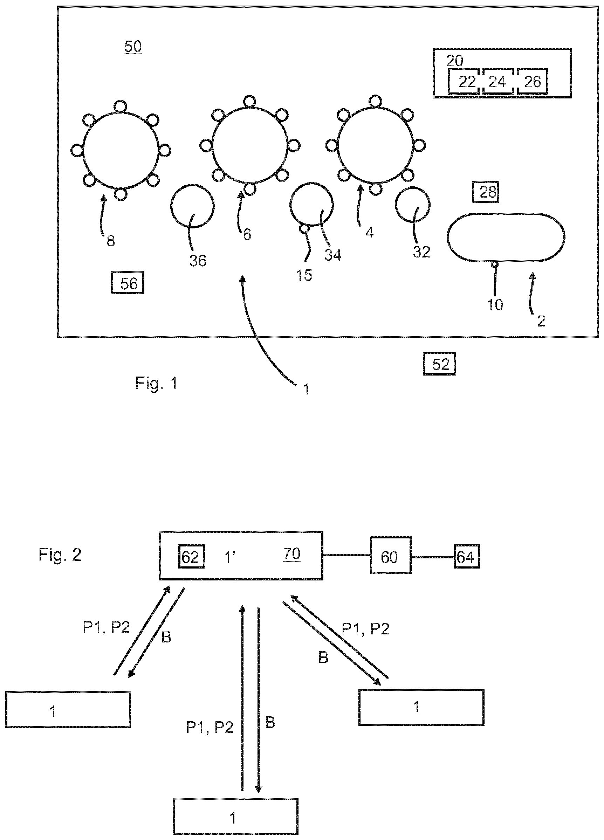

Fig. 1 zeigt eine grob schematische Darstellung einer Anlage zum Behandeln von Behältnissen. Diese Anlage weist eine erste Behandlungseinrichtung 2 in Form eines Ofens auf, der Kunststoffvorformlinge 10 erwärmt. Dabei werden hier die Kunststoffvorformlinge 10 transportiert und von (insbesondere stationären) Heizelementen erwärmt. Diese so erwärmten Kunststoffvorformlinge werden über eine Transporteinrichtung 32, beispielsweise einen Transferstern an eine Umformungseinrichtung 4 übergeben und dort zu Kunststoffflaschen 15 expandiert. Diese Kunststoffflaschen 15 werden über einer weiteren Transferstern 34 an eine weitere Behandlungseinrichtung hier in Form einer Fülleinrichtung 6 übergeben und dort mit einer Flüssigkeit befüllt. Die so befüllten Behältnisse werden über einen weiteren Transferstern 36 zu einer weiteren Behandlungseinrichtung 8 transportiert und dort beispielsweise etikettiert. Weiterhin kann die Anlage eine (nicht gezeigte) Sterilisationseinrichtung aufweisen, welche die Kunststoffvorformlinge oder die hieraus gefertigten Kunststoffflaschen sterilisiert.

Die gesamte Anlage 1 befindet sich innerhalb einer Betriebsumgebung 50. Dies kann beispielsweise eine Maschinenhalle sein. Das Bezugszeichen 20 kennzeichnet eine Steuerungseinrichtung, welche zum Steuern der Anlage 1 bzw. der einzelnen Behandlungseinrichtungen 2, 4, 6, 8 dient. Das Bezugszeichen 22 kennzeichnet eine erste Sensoreinrichtung, die einen Umgebungsparameter bzw. einen ersten physikalischen Parameter P1 ermittelt, wie beispielsweise eine Umgebungstemperatur oder eine Luftfeuchtigkeit. Dieser Parameter wird besonders bevorzugt über eine vorgegebene Zeitspanne ermittelt und in einer Speichereinrichtung 24 (bevorzugt zeitabhängig) abgespeichert. Das Bezugszeichen 28 kennzeichnet eine weitere Sensoreinrichtung, welche einen weiteren Betriebsparameter aufnimmt.

Daneben kann eine Sensoreinrichtung 52 vorgesehen sein, welche einen zweiten Parameter bestimmt, etwa ein Alter oder eine Temperatur der Kunststoffvorformlinge. Zu diesem Zweck können, wie oben erwähnt, auch Markierungen der Kunststoffvorformlinge ausgelesen werden. Diese einzelnen Parameter werden (insbesondere auch zeitabhängig) in der Speichereinrichtung 24 gespeichert. Das Bezugszeichen 26 kennzeichnet eine Sendeeinrichtung, welche diese physikalischen Parameter an eine (nicht gezeigte) Zentraleinheit (beispielsweise bei dem Hersteller der Anlage) übermittelt. Das Bezugszeichen 56 bezieht sich auf eine (nur schematisch dargestellte) Sensoreinrichtung, welche wenigstens eine Eigenschaft der hergestellten Behältnisse ermittelt, wie etwa eine Wandungsstärke der Kunststoffbehältnisse. Wie erwähnt, können mehrere solcher Sensoreinrichtungen vorhanden sein, die etwa an einem Ausgang des Ofens 2 oder einem Ausgang der Umformungseinrichtung 4 solche Werte bestimmen.

Fig. 2 veranschaulicht die Vorgehensweise. Dabei bezieht sich das Bezugszeichen 1 jeweils auf Maschinen, welche die physikalischen Parameter P1 und P2 übermitteln und an einen Hersteller senden. Dieser Hersteller bildet eine Simulationsumgebung 70 auf Basis der besagten physikalischen Parameter. In dieser Simulationsumgebung wird eine Testanlage 1' in Betrieb genommen, welche insbesondere baugleich mit der Maschine 1 ist. Auf Basis dieses Betriebs der Testanlage 1' werden Betriebsparameter B ermittelt und diese werden wiederum an die einzelnen Maschinen 1 ausgegeben, sodass diese nun mit unter realistischen Umgebungsbedingungen aufgenommenen Parametern bzw. derart bestimmten Betriebsrezepten arbeiten können. Das Bezugszeichen 60 kennzeichnet schematisch eine Betriebsrezeptermittlungseinrichtung, welche auf Basis der Parameter B1, B2 ein Betriebsrezept zum Betreiben der Anlagen 1 ermittelt. Dabei kann diese Betriebsrezeptermittlungseinrichtung auch auf bereits bekannte anlagenspezifische Werte zurückgreifen. Bevorzugt weist die Testanlage 1' auch weitere Sensoreinrichtungen 62 auf, welche für den Betrieb der Testanlage 1' charakteristische Parameter, wie beispielsweise Temperaturen oder Drück ermittelt.

Daneben weist bevorzugt die Testanlage auch Sensoreinrichtungen 64 auf, welche Parameter ermittelt, welche für von dieser Testanlage 1 behandelte Behältnisse charakteristisch sind. Diese gewonnenen Daten können (gemeinsam mit den Parametern B1, B2 zur Ermittlung des Betriebsrezepts genutzt werden. Dabei können die Parameter B1, B2 auch als Vorgabewerte verwendet werden, um in der Testumgebung 70 Betriebsbedinungen herzustellen, welche den Betriebsbedingungen an den Betriebsorten Anlagen 1 zumindest nahekommen

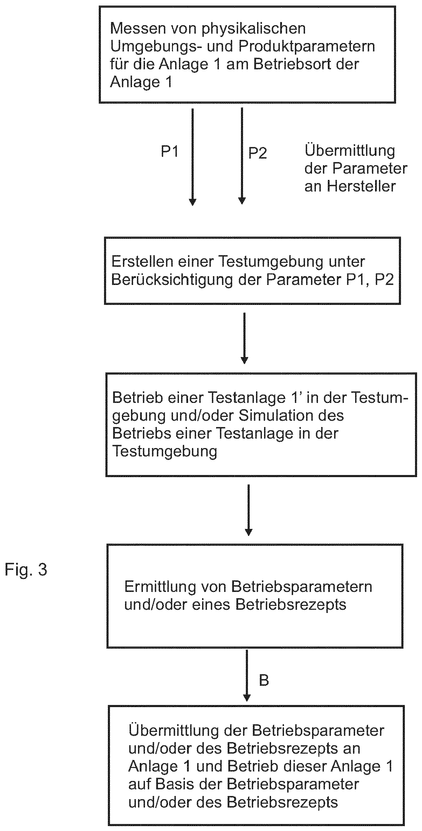

Fig. 3 zeigt ein Ablaufdiagramm für ein erfindungsgemäßes Verfahren. So werden in einem ersten Verfahrensschritt physikalische Umgebungs- und Produktparameter P1, P2 für die in Betrieb zu nehmende Anlage 1 an dem Betriebsort der Anlage aufgenommen. Diese Daten werden beispielsweise an einen Hersteller übermittelt. Der Hersteller erstellt eine Testumgebung, wobei die Parameter P1 und P2 berücksichtigt werden. Dabei kann es sich beispielsweise, wie oben erwähnt, um eine Klimakammer handeln, in der die besagten Bedingungen simuliert werden. Weiterhin wird eine Testanlage 1' in dieser Testumgebung betrieben oder es wird der Betrieb einer Testanlage in dieser Testumgebung simuliert. Letzteres ist insbesondre möglich, wenn bereits vorher bzw. früher entsprechende Tests durchgeführt wurden. Auf Basis dieses Testbetriebs werden Betriebsparameter und/oder ein Betriebsrezept B ermittelt und die diese Betriebsparameter werden wiederum an den Benutzer der Anlage 1 übergeben und dieser kann diese Anlage 1 nun auf Basis dieser Betriebsparameter B betreiben. Daneben kann auch (nicht gezeigt) eine physikalische Eigenschaft der behandelten Behältnisse aufgenommen und entsprechend weitergeleitet werden.

Wie oben erwähnt können dabei die für die Kunststoffvorformlinge relevanten Dateien auch mit Hilfe eines Testlabors ermittelt werden. Derartige Sensoreinrichtungen können dabei beispielsweise auch physikalische Eigenschaften der verwendeten Kunststoffvorformlinge ermitteln, wie beispielsweise ein Material der Kunststoffvorformlinge und dergleichen. Daneben können bereits bei dem Maschinenbetreiber Analysen des für die Kunststoffvorformlinge verwendeten Materials durchgeführt werden. Auch diese Analysen der verwendeten Kunststoffvorformlinge können dabei an den Maschinenhersteller übermittelt werden.

Daneben können auch beim Betrieb der Anlage entstehende oder verwendete Fluide analysiert werden. So können beispielsweise Proben entnommen werden, beispielsweise Proben von Sterilisationsmitteln und dergleichen womit diese analysiert werden. Diese Analyseergebnisse können dem Anlagenhersteller mitgeteilt werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Anlage
- 1': Testanlage
- 2: Behandlungseinrichtung
- 4: Umformungseinrichtung, Behandlungseinrichtung
- 6: Behandlungseinrichtung
- 8: Behandlungseinrichtung
- 10: Kunststoffvorformlinge
- 15: Kunststoffflasche
- 20: Steuerungseinrichtung
- 24: Speichereinrichtung
- 26: Sendeeinrichtung
- 28: weitere Sensoreinrichtung
- 22: erste Sensoreinrichtung
- 32: Übergabeeinrichtung
- 34: Transferstern
- 36: Transferstern
- 50: Betriebsumgebung
- 60: Betriebsrezeptermittlungseinrichtung
- 62, 64: Sensoreinrichtung
- 70: Simulationsumgebung
- B: Betriebsparameter
- B1, B2: Parameter
- P1, P2: physikalischer Parameter

## Patentansprüche

1. Verfahren zum Betreiben einer Anlage (1) zum Behandeln von Behältnissen (10, 15), wobei diese Anlage zum Behandeln von Behältnissen (10, 15) eine erste Behandlungseinrichtung (4) aufweist, welche die Behältnisse (10, 15) in einer ersten vorgegebenen Weise behandelt, sowie wenigstens eine zweite Behandlungseinrichtung (6), welche die Behältnisse (10, 15) in einer zweiten vorgegebenen Weise behandelt sowie eine Transporteinrichtung (32, 34), welche die Behältnisse (10) von der ersten Behandlungseinrichtung (4) zu der zweiten Behandlungseinrichtung (6) transportiert, **dadurch gekennzeichnet, dass**
eine Steuerungseinrichtung (20) die Behandlung der Behältnisse (10, 15) durch wenigstens eine der beiden Behandlungseinrichtungen (4, 6) unter Verwendung wenigstens eines ersten physikalischen Parameters (P1), der für Umgebungsbedingungen an einem Betriebsort der Anlage charakteristisch ist und unter Verwendung wenigstens eines zweiten physikalischen Parameters (P2), der für eine physikalische Eigenschaft der zu behandelnden Behältnisse charakteristisch ist, steuert, wobei wenigstens einer dieser physikalischen Parameter (P1, P2) bestimmt wird und unter Zugrundelegung dieses Parameters (P1, P2) sowie unabhängig von der Anlage ein Betriebsrezept ermittelt wird, mittels dessen die Steuerungseinrichtung (20) wenigstens eine Behandlungseinrichtung steuert und wobei das Betriebsrezept wenigstens an einem von dem Betriebsort unterschiedlichen Ort ermittelt wird und wobei die Umgebungsbedingungen einkalkuliert werden und auf Basis dieser vor Ort Gegebenheiten das Betriebsrezept erstellt wird.

2. Verfahren nach wenigstens einem der vorangegangenen Ansprüche,
**dadurch gekennzeichnet, dass**
auf Basis des wenigstens einen physikalischen Parameters an dem von dem Betriebsort unterschiedlichen Ort Betriebsbedingungen simuliert und/oder geschaffen werden, welche den Umgebungsbedingungen an dem Betriebsort angepasst sind.

3. Verfahren nach wenigstens einem der vorangegangenen Ansprüche,
**dadurch gekennzeichnet, dass**
das Betriebsrezept mittels einer weiteren Anlage (1') zum Behandeln von Behältnissen ermittelt wird.

4. Verfahren nach wenigstens einem der vorangegangenen Ansprüche,
**dadurch gekennzeichnet, dass**
der erste physikalische Parameter aus einer Gruppe von physikalischen Parametern ausgewählt ist, welche eine Umgebungstemperatur in einer Maschinenhalle, in welcher die Anlage sich befindet, eine Außentemperatur, eine Innentemperatur, einen Luftdruck, eine Luftfeuchtigkeit, einen Feuchtigkeitsgrad von Kunststoffvorformlingen, eine Temperatur von Kunststoffvorformlingen und dergleichen enthält.

5. Verfahren nach wenigstens einem der vorangegangenen Ansprüche,
**dadurch gekennzeichnet, dass**
der zweite physikalische Parameter aus einer Gruppe von physikalischen Parametern ausgewählt ist, welche ein Alter von Kunststoffvorformlingen, ein Material der Kunststoffvorformlinge, optische Eigenschaften der Kunststoffvorformlinge, insbesondere eine IR- Absorption der Kunststoffvorformlinge und dergleichen enthält.

6. Verfahren nach wenigstens einem der vorangegangenen Ansprüche,
**dadurch gekennzeichnet, dass**
eine Vielzahl von ersten und/oder zweiten Parametern (P1, P2) bestimmt wird.

7. Verfahren nach wenigstens einem der vorangegangenen Ansprüche,
**dadurch gekennzeichnet, dass**
das Betriebsrezept nach einer erstmaligen Inbetriebnahme der Anlage ermittelt wird.

8. Verfahren nach wenigstens einem der vorangegangenen Ansprüche,
**dadurch gekennzeichnet, dass**
wenigstens einen physikalische Eigenschaft ermittelt wird, welche für ein von der Anlage hergestelltes Behältnis charakteristisch ist und diese physikalische Eigenschaft bei der Ermittlung des Betriebsrezepts berücksichtigt wird.

9. Anlage zum Behandeln von Behältnissen mit Betriebsrezeptermittlungseinrichtung (60), wobei diese Anlage zum Behandeln von Behältnissen (10) vorgesehen ist, mit einer ersten Behandlungseinrichtung (4), welche die Behältnisse in einer ersten vorgegebenen Weise behandelt, und wenigstens eine zweite Behandlungseinrichtung (6), welche die Behältnisse in einer zweiten vorgegebenen Weise behandelt sowie eine Transporteinrichtung (32, 34, 36), welche die Behältnisse (10) von der ersten Behandlungseinrichtung (4) zu der zweiten Behandlungseinrichtung (6) transportiert und mit einer Steuerungseinrichtung (20), welche die Behandlung der Behältnisse (10) durch wenigstens eine der beiden Behandlungseinrichtungen (4, 6) steuert
**dadurch gekennzeichnet, dass**
die Anlage wenigstens eine erste Erfassungseinrichtung ausgebildet zum Erfassen wenigstens eines ersten physikalischen Parameters (P1), der für Umgebungsbedingungen an einem Betriebsort der Anlage charakteristisch ist und eine zweite Erfassungseinrichtung ausgebildet zum Erfassen wenigstens eines zweiten physikalischen Parameters (P2), der für eine physikalische Eigenschaft der zu behandelnden Behältnisse charakteristisch ist, sowie eine Betriebsrezeptermittlungseinrichtung (60) aufweist, welche dazu geeignet und bestimmt ist, unter Zugrundelegung wenigstens eines dieser Parameter (P1, P2) sowie unabhängig von der Anlage ein Betriebsrezept zu ermitteln, mittels dessen die Steuerungseinrichtung (20) wenigstens eine Behandlungseinrichtung (4, 6) steuert und wobei die Betriebsrezeptermittlungseinrichtung (60) so ausgestaltet ist, dass das Betriebsrezept wenigstens an einem von dem Betriebsort unterschiedlichen Ort ermittelt wird und wobei die Umgebungsbedingungen einkalkuliert werden und auf Basis dieser vor Ort Gegebenheiten das Betriebsrezept erstellt wird.

10. Anlage nach Anspruch 9,
**dadurch gekennzeichnet, dass**
die Anlage eine Simulationsumgebung (70) aufweist, innerhalb derer von der wenigstens einen Erfassungseinrichtung ermittelte Umgebungsbedingungen simulierbar sind.

## Claims

1. A method for operating a system (1) for handling containers (10, 15), wherein said system for handling containers (10, 15) has a first handling device (4) which handles the containers (10, 15) in a first predetermined manner, and at least one second handling device (6) which handles the containers (10, 15) in a second predetermined manner, and a transport device (32, 34) which transports the containers (10) from the first handling device (4) to the second handling device (6),
**characterized in that**
a control device (20) controls the handling of the containers (10, 15) by at least one of the two handling devices (4, 6) using at least one first physical parameter (P1) which is characteristic of environmental conditions at an operating site of the system and using at least one second physical parameter (P2) which is characteristic of a physical property of the containers to be handled, wherein at least one of these physical parameters (P1, P2) is determined and an operating recipe is determined independently of the system and taking this parameter (P1, P2) as a basis, which operating recipe is used by the control device (20) to control at least one handling device and wherein the operating recipe is determined at least at a different location from the operating site and wherein the environmental conditions are taken into account and on the basis of this local conditions the operating recipe is obtained.

2. The method as claimed in at least one of the preceding claims,
**characterized in that**
on the basis of the at least one physical parameter, operating conditions are simulated and/or created at the location different from the operating site, which are adapted to the environmental conditions at the operating site.

3. The method as claimed in at least one of the preceding claims,
**characterized in that**
the operating recipe is determined using another system (1') for handling containers.

4. The method as claimed in at least one of the preceding claims,
**characterized in that**
the first physical parameter is selected from a group of physical parameters, which includes an ambient temperature in a machine room in which the system is located, an external temperature, an indoor temperature, an air pressure, a humidity, a moisture level of plastic preforms, a temperature of plastic preforms, and the like.

5. The method as claimed in at least one of the preceding claims,
**characterized in that**
the second physical parameter is selected from a group of physical parameters, which includes an age of plastic preforms, a material of the plastic preforms, optical properties of the plastic preforms, in particular an IR absorption of the plastic preforms, and the like.

6. The method as claimed in at least one of the preceding claims,
**characterized in that**
a plurality of first and/or second parameters (P1, P2) is determined.

7. The method as claimed in at least one of the preceding claims,
**characterized in that**
the operating recipe is determined after a commissioning of the system for the first time.

8. The method as claimed in at least one of the preceding claims,
**characterized in that**
at least one physical property is determined, which is characteristic for a container produced by the system and this physical property is taken into account in the determination of the operating recipe.

9. A system for handling containers having an operating recipe determination device, wherein said system is provided for handling containers (10), having a first handling device (4) which handles the containers in a first predetermined manner, and at least one second handling device (6) which handles the containers in a second predetermined manner, and a transport device (32, 34, 36) which transports the containers (10) from the first handling device (4) to the second handling device (6) and with a control device (20), which controls the handling of the containers (10) by at least one of the two handling devices (4, 6),
**characterized in that**
the system forms at least one first recording device for recording at least one first physical parameter (P1), which is characteristic of environmental conditions at an operating site of the system, and/or forms a second recording device for recording at least one second physical parameter (P2), which is characteristic of a physical property of the containers to be handled, and an operating recipe determination device (60) which is suitable and designed for determining an operating recipe, taking at least one of these parameters (P1, P2) as a basis and also independent from the system, which operating recipe is used by the control device (20) to control at least one handling device (4, 6) and wherein the operating recipe determination device (60) is designed such that the operating recipe is determined at least at a location which is different from the operating site and wherein the environmental conditions are taken into account and on the basis of this local conditions the operating recipe is obtained.

10. The system as claimed in claim 9,
**characterized in that**
the system has a simulation environment (70), within which environmental conditions determined by the at least one recording device can be simulated.

## Revendications

1. Procédé permettant de faire fonctionner une installation (1) pour le traitement de contenants (10, 15), dans lequel cette installation pour le traitement de contenants (10, 15) présente un premier dispositif de traitement (4) qui traite les contenant (10, 15) d'une première manière prédéterminée, ainsi qu'au moins un deuxième dispositif de traitement (6) qui traite les contenant (10, 15) d'une deuxième manière prédéterminée, ainsi qu'un dispositif de transport (32, 34) qui transporte les contenants (10) du premier dispositif de traitement (4) au deuxième dispositif de traitement (6),
**caractérisé en ce que**
un dispositif de commande (20) commande le traitement des contenants (10, 15) par au moins l'un des deux dispositifs de traitement (4, 6) en utilisant au moins un premier paramètre physique (P1) qui est caractéristique des conditions environnementales à un emplacement de fonctionnement de l'installation et en utilisant au moins un deuxième paramètre physique (P2) qui est caractéristique d'une propriété physique des contenants à traiter, dans lequel au moins un de ces paramètres physiques (P1, P2) est déterminé et sur la base de ce paramètre (P1, P2) et indépendamment de l'installation une recette de fonctionnement est élaborée, à l'aide de laquelle le dispositif de commande (20) commande au moins un dispositif de traitement et dans lequel la recette de fonctionnement est élaborée au moins à un emplacement différent de l'emplacement de fonctionnement et dans lequel les conditions environnementales sont prises en compte et la recette de fonctionnement est élaborée sur site sur la base de ces conditions.

2. Procédé selon au moins l'une des revendications précédentes,
**caractérisé en ce que**
les conditions de fonctionnement qui sont adaptées aux conditions environnementales sur l'emplacement de fonctionnement sont simulées et/ou créées sur la base du au moins un paramètre physique à l'emplacement différent de l'emplacement de fonctionnement.

3. Procédé selon au moins l'une des revendications précédentes,
**caractérisé en ce que**
la recette de fonctionnement est élaborée à l'aide d'une installation supplémentaire (1') pour le traitement de contenants.

4. Procédé selon au moins l'une des revendications précédentes,
**caractérisé en ce que**
le premier paramètre physique est sélectionné dans un groupe de paramètres physiques comprenant une température ambiante dans une salle des machines dans laquelle se trouve l'installation, une température extérieure, une température intérieure, une pression de l'air, une humidité de l'air, une teneur en humidité de préformes en plastique, une température de préformes en plastique et similaires.

5. Procédé selon au moins l'une des revendications précédentes,
**caractérisé en ce que**
le deuxième paramètre physique est sélectionné dans un groupe de paramètres physiques comprenant un âge des préformes en plastique, un matériau des préformes en plastique, des propriétés optiques des préformes en plastique, en particulier une absorption IR des préformes en plastique et similaires.

6. Procédé selon au moins l'une des revendications précédentes,
**caractérisé en ce que**
une pluralité de premiers et/ou de deuxièmes paramètres (P1, P2) est déterminée.

7. Procédé selon au moins l'une des revendications précédentes,
**caractérisé en ce que**
la recette de fonctionnement est élaborée après la première mise en service de l'installation.

8. Procédé selon au moins l'une des revendications précédentes,
**caractérisé en ce que**
au moins une propriété physique qui est caractéristique pour un contenant produit par l'installation est déterminée et cette propriété physique est prise en compte lors de l'élaboration de la recette de fonctionnement.

9. Installation pour le traitement de contenants avec un dispositif d'élaboration de recette de fonctionnement (60), dans laquelle cette installation est prévue pour le traitement de contenants (10), avec un premier dispositif de traitement (4) qui traite les contenant d'une première manière prédéterminée, et au moins un deuxième dispositif de traitement (6) qui traite les contenant d'une deuxième manière prédéterminée, ainsi qu'un dispositif de transport (32, 34, 36) qui transporte les contenants (10) du premier dispositif de traitement (4) au deuxième dispositif de traitement (6) et avec un dispositif de commande (20) qui commande le traitement des contenants (10) par au moins l'un des deux dispositifs de traitement (4, 6),
**caractérisée en ce que**
l'installation présente au moins un dispositif de détection pour la détection d'au moins un premier paramètre physique (P1) qui est caractéristique des conditions environnementales à un emplacement de fonctionnement de l'installation et un deuxième dispositif de détection pour la détection d'au moins un deuxième paramètre physique (P2) qui est caractéristique d'une propriété physique des contenants à traiter, ainsi qu'un dispositif d'élaboration de recette de fonctionnement (60) conçu pour et destiné à, sur la base de ce paramètre (P1, P2) et indépendamment de l'installation, élaborer une recette de fonctionnement à l'aide de laquelle le dispositif de commande (20) commande au moins un dispositif de traitement (4, 6) et dans laquelle le dispositif d'élaboration de recette de fonctionnement (60) est conçu de telle sorte que la recette de fonctionnement est élaborée au moins à un emplacement différent de l'emplacement de fonctionnement et dans laquelle les conditions environnementales sont prises en compte et la recette de fonctionnement est élaborée sur site sur la base de ces conditions.

10. Installation selon la revendication 9,
**caractérisée en ce que**
l'installation présente un environnement de simulation (70) dans lequel les conditions ambiantes déterminées par l'au moins un dispositif de détection peuvent être simulées.
